(19) Europäisches Patentamt
European Patent Office
Office européen des brevets

(11) **EP 4 764 866 A1**

(12) **DEMANDE DE BREVET EUROPEEN**

(43) Date de publication:
**24.06.2026  Bulletin 2026/26**

(21) Numéro de dépôt: **25225101.2**

(22) Date de dépôt: **18.12.2025**

(51) Classification Internationale des Brevets (IPC):
*G06F 11/34* (2006.01)

(52) Classification Coopérative des Brevets (CPC):
**G06F 11/3447; G06F 11/3409;** G06F 2201/865

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité:  **18.12.2024  FR 2414472**

(71) Demandeur: **THALES**
**92190 Meudon (FR)**

(72) Inventeurs:
• **POIROT, Gilles**
**78140 VELIZY VILLACOUBLAY (FR)**
• **Wang, Estelle**
**78140 VELIZY VILLACOUBLAY (FR)**

(74) Mandataire: **Lavoix**
**2, place d'Estienne d'Orves**
**75441 Paris Cedex 09 (FR)**

(54) **PROCÉDÉ D ESTIMATION DE LA PERFORMANCE D'UNE ARCHITECTURE LOGICIELLE FORMÉE PAR UN ENSEMBLE DE BLOCS MATÉRIELS ET LOGICIELS, DISPOSITIF ET PROCÉDÉ ASSOCIÉS**

(57)   La présente invention concerne un procédé d'estimation de la performance d'une architecture logicielle (40) formée par au moins un bloc matériel (44) et au moins un bloc logiciel (46) comprenant une étape de :
- réception d'un ensemble (42) de blocs (44, 46) formant une architecture logicielle (40),
- obtention de l'efficience élémentaire du bloc (44, 46) par lecture d'une première base de données associant à chaque bloc une efficience élémentaire,
- détermination d'au moins un indicateur de performance élémentaire distinct de l'efficience par lecture dans une deuxième base de données associant à chaque bloc ledit au moins un indicateur de performance élémentaire, et
- estimation de la performance de l'architecture logicielle (40) à partir des efficiences élémentaires obtenues et des indicateurs de performance élémentaire.

FIG.3

EP 4 764 866 A1

**Description**

La présente invention concerne un procédé d'estimation de la performance d'une architecture logicielle formée par un ensemble de blocs. Elle se rapporte également à un procédé de réalisation d'une architecture logicielle. L'invention porte aussi sur un système d'estimation associé.

De nos jours, du fait des problématiques autour du réchauffement climatique, une nouvelle exigence s'est développée dans de multiples domaines techniques, souvent résumée sous le terme anglais de « sustainability » qui peut se traduire par durabilité, soutenabilité ou efficience.

Cela s'applique en particulier pour les architectures logicielles qu'on cherche à rendre plus respectueuses de l'environnement, et notamment plus frugales en consommation.

Toutefois, l'évaluation de ce respect de l'environnement est complexe pour une architecture logicielle puisqu'une architecture logicielle implique de nombreux éléments, notamment des éléments matériels (mémoires et processeurs notamment), contribuant à l'empreinte écologique de l'architecture globale de manière dépendante.

Autrement formulé, il ne suffit pas de diminuer l'empreinte écologique de chacun des éléments pris individuellement pour diminuer l'empreinte écologique au niveau de l'architecture logicielle.

Il existe donc un besoin pour un procédé permettant une estimation de la performance d'une architecture logicielle prenant en compte cette complexité.

A cet effet, la description a pour objet un procédé d'estimation de l'efficience d'une architecture logicielle formée par un ensemble de blocs, l'ensemble de blocs comportant au moins un bloc matériel et au moins un bloc logiciel, le procédé d'estimation étant mis en œuvre par un système d'estimation, le procédé d'estimation comprenant :

- une étape de réception d'un ensemble de blocs formant une architecture logicielle,
- pour chacun des blocs, une étape d'obtention de l'efficience élémentaire du bloc par lecture d'une base de données, la base de données associant à chaque bloc susceptible de faire partie d'une architecture logicielle une efficience élémentaire,
- pour chacun des blocs, une étape de détermination de la contribution relative de chaque bloc à l'efficience de l'architecture logicielle, et
- une étape d'estimation de l'efficience de l'architecture logicielle à partir des efficiences élémentaires obtenues et des contributions relatives déterminées.

Autrement formulé, il est proposé une méthode et formulation de mesure de l'efficience énergétique d'une architecture à partir d'une description textuelle, et/ou graphique de cette architecture reflétant les choix et décisions. Pour chaque bloc de l'architecture, ainsi que leurs connexions, une mesure est effectuée en se basant sur un ensemble de propriétés natives ainsi que des configurations effectuées par l'architecte, dépendant du type du bloc et de la solution choisie. Toutes les propriétés n'ont pas la même importance, en terme d'impact et donc une première pondération est appliquée dans notre calcul. Une seconde pondération est appliquée ensuite pour prendre en compte cette fois le cas d'utilisation, le type de charge, les types d'échanges, plus généralement le contexte qui peut changer l'importance de certains paramètres.

Il est ensuite considéré des facteurs correctifs comme le style architectural, l'adéquation d'un bloc dans ce style et avec les autres blocs.

Ainsi, suivant d'autres aspects avantageux, le procédé d'estimation comprend une ou plusieurs des caractéristiques suivantes, prises isolément ou suivant toutes les combinaisons techniquement possibles :

- lors de l'étape de détermination, la contribution relative dépend de l'utilisation du bloc par l'architecture logicielle.
- le procédé comporte, en outre, pour chacun des blocs, une étape de calcul d'un paramètre représentatif de l'intégration du bloc dans l'ensemble des blocs, l'étape d'estimation prenant également en compte les paramètres représentatifs de l'intégration.
- lors de l'étape d'estimation, il est calculé la somme des efficiences élémentaires obtenues pondérées par les contributions relatives déterminées, l'efficience dépendant du résultat de la somme calculée.
- le procédé comporte une étape d'obtention d'un coefficient correctif représentatif du type de l'architecture logicielle.
- l'au moins un bloc matériel est choisi dans la liste constituée d'un bloc de calcul, d'un bloc de sécurité, d'un bloc de mémorisation, d'un bloc d'interface, d'un bloc réseau et d'un bloc de réseau de diffusion de contenu.
- l'au moins un bloc logiciel est choisi dans la liste constituée d'une interface de programmation d'application, d'une passerelle d'interface de programmation d'application, d'un maillage de services, d'un modèle d'inférence, d'un modèle de fondation et d'un ordonnanceur.
- l'efficience est une mesure de la consommation.

La description a également pour objet un procédé de réalisation d'une architecture logicielle formée par un ensemble de blocs, l'ensemble de blocs comportant au moins un bloc matériel et au moins un bloc logiciel, le procédé comprenant :

- une étape de mise en œuvre du procédé d'estimation tel que précédemment décrit sur un ensemble d'architectures logicielles candidates, pour obtenir l'efficience de chaque architecture logicielle candidate,
- une étape de sélection de l'architecture logicielle
candidate présentant l'efficience la plus élevée, et
- une étape de réalisation de l'architecture logicielle
sélectionnée.

La description concerne aussi un système d'estimation de l'efficience d'une architecture logicielle formée par un ensemble de blocs, l'ensemble de blocs
comportant au moins un bloc matériel et au moins un
bloc logiciel, le système d'estimation comprenant :

- un module de réception, le module de réception
étant propre à recevoir un ensemble de blocs formant une architecture logicielle,
- un module de mémorisation, le module de mémorisation étant propre à mémoriser une base de données associant à chaque bloc susceptible de faire
partie d'une architecture logicielle une efficience
élémentaire
- un module d'obtention, le module d'obtention étant
propre à, pour chacun des blocs, obtenir l'efficience
élémentaire du bloc par lecture de la base de données,
- un module de détermination, le module de détermination étant propre à, pour chacun des blocs, déterminer la contribution relative de chaque bloc à l'efficience de l'architecture logicielle, et
- un module d'estimation, le module d'estimation étant
propre à estimer l'efficience de l'architecture logicielle à partir des efficiences élémentaires obtenues
et des contributions relatives déterminées.

A cet effet, la description a pour objet un procédé d'estimation de la performance d'une architecture
logicielle formée par un ensemble de blocs, l'ensemble
de blocs comportant au moins un bloc matériel et au
moins un bloc logiciel, le procédé d'estimation étant mis
en œuvre par un système d'estimation, le procédé d'estimation comprenant :

- une étape de réception d'un ensemble de blocs
formant une architecture logicielle,
- pour chacun des blocs, une étape d'obtention de
l'efficience élémentaire du bloc par lecture d'une
première base de données, la première base de
données associant à chaque bloc susceptible de
faire partie d'une architecture logicielle une efficience élémentaire,
- pour chacun des blocs, une étape de détermination
d'au moins un indicateur de performance élémentaire, l'au moins un indicateur de performance élémentaire étant distinct de l'efficience, l'étape de
détermination est mise en œuvre par lecture dans
une deuxième base de données, la deuxième base
de données associant à chaque bloc susceptible de
faire partie d'une architecture logicielle ledit au moins un indicateur de performance élémentaire, et
- une étape d'estimation de la performance de l'architecture logicielle à partir des efficiences élémentaires obtenues et des indicateurs de performance
élémentaire.

Suivant d'autres aspects avantageux, le procédé d'estimation comprend une ou plusieurs des caractéristiques suivantes, prises isolément ou suivant toutes
les combinaisons techniquement possibles :

- la deuxième base de données est une table de
décision.
- l'étape de détermination est réalisée par interaction
du système d'estimation avec une interface de programmation applicative.
- l'au moins indicateur de performance est choisi dans
la liste constitué par un indicateur de sécurité, un
indicateur de fiabilité et un indicateur de qualité.
- les indicateurs de performances déterminés à l'étape de détermination sont un indicateur de sécurité,
un indicateur de fiabilité, un indicateur de performance et un indicateur de qualité.
- l'étape d'estimation comporte une agrégation des
efficiences élémentaires pour obtenir une efficience
globale.
- pour chaque indice de performance, l'étape d'estimation comporte une agrégation des indices de
performance élémentaires pour obtenir un indice
de performance global.
- chaque agrégation est mise en œuvre pour une
partie seulement des blocs de l'ensemble des blocs.

La description a également pour objet un procédé de réalisation d'une architecture logicielle formée
par un ensemble de blocs, l'ensemble de blocs comportant au moins un bloc matériel et au moins un bloc logiciel,
le procédé comprenant :

- une étape de mise en œuvre du procédé d'estimation tel que précédemment décrit sur un ensemble
d'architectures logicielles candidates, pour obtenir
l'efficience de chaque architecture logicielle candidate,
- une étape de sélection de l'architecture logicielle
candidate présentant la performance la plus élevée,
et
- une étape de réalisation de l'architecture logicielle
sélectionnée.

La description concerne aussi un système d'estimation de la performance d'une architecture logicielle
formée par un ensemble de blocs, l'ensemble de blocs
comportant au moins un bloc matériel et au moins un bloc
logiciel, le système d'estimation comprenant :

- un module de réception, le module de réception
étant propre à recevoir un ensemble de blocs formant une architecture logicielle,

- un module de mémorisation, le module de mémorisation étant propre à mémoriser une première base de données associant à chaque bloc susceptible de faire partie d'une architecture logicielle une efficience élémentaire,
- un module d'obtention, le module d'obtention étant propre à, pour chacun des blocs, obtenir l'efficience élémentaire du bloc par lecture de la première base de données,
- un module de détermination, le module de détermination étant propre à, pour chacun des blocs, déterminer au moins un indicateur de performance élémentaire, l'au moins un indicateur de performance élémentaire étant distinct de l'efficience, le module de déterminant l'au moins un indicateur de performance élémentaire par lecture dans une deuxième base de données, la deuxième base de données associant à chaque bloc susceptible de faire partie d'une architecture logicielle ledit au moins un indicateur de performance élémentaire, et
- un module d'estimation, le module d'estimation étant propre à estimer la performance de l'architecture logicielle à partir des efficiences élémentaires obtenues et des indicateurs de performance élémentaire.

Dans la présente description, l'expression « propre à » signifie indifféremment « adapté pour », « adapté à » ou « configuré pour ».

L'invention apparaîtra plus clairement à la lecture de la description qui va suivre, donnée uniquement à titre d'exemple non limitatif, et faite en référence aux dessins dans lesquels :

- la figure 1 est une représentation schématique d'un ordinogramme correspondant à un exemple de mise en œuvre d'un procédé d'estimation de l'efficience d'une architecture logicielle,
- la figure 2 est une représentation schématique d'un système d'estimation de l'efficience d'une architecture logicielle,

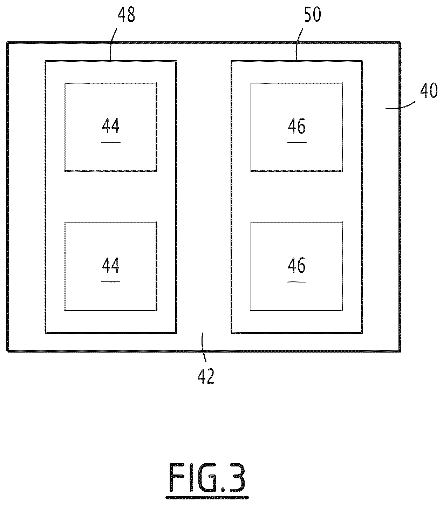

- la figure 3 est une représentation schématique de la structure d'une architecture logicielle,
- la figure 4 est une représentation schématique d'un exemple d'architecture logicielle sur laquelle le procédé d'estimation de l'efficience est mis en œuvre,
- la figure 5 est une représentation schématique d'un ordinogramme correspondant à un exemple de mise en œuvre d'un procédé de réalisation d'une architecture logicielle,
- la figure 6 est une représentation schématique d'un ordinogramme correspondant à un exemple de mise en œuvre d'un procédé d'estimation de la performance d'une architecture logicielle, et
- la figure 7 est une représentation schématique d'un système d'estimation de la performance d'une architecture logicielle.

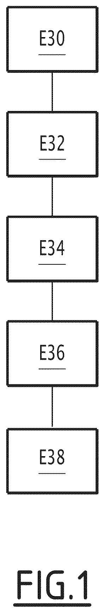

La figure 1 est une représentation schématique d'un ordinogramme correspondant à un exemple de mise en œuvre d'un procédé d'estimation de l'efficience d'une architecture logicielle.

Le procédé d'estimation vise à obtenir une valeur d'efficience.

Selon l'exemple décrit, l'efficience est une mesure de l'utilisation des ressources, par exemple exprimée en terme de consommation.

Typiquement, utiliser 200 Go pendant une heure conduit à consommer moins que 100 Go pendant 10 heures.

Dans la suite, dans un souci d'exemplification et de clarté pour le lecteur, au lieu d'utiliser le terme efficience, il sera utilisé le terme de consommation.

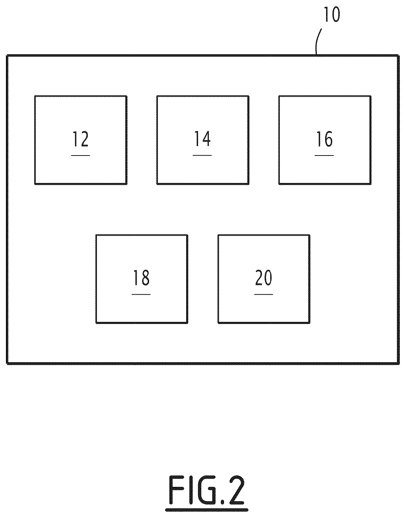

Le procédé d'estimation est mis en œuvre par un système d'estimation 10 de l'efficience représenté sur la figure 2.

Le système d'estimation 10 comporte un module de réception 12, un module d'obtention 14, un module de détermination 16 et un module d'estimation 18.

Dans l'exemple de la figure 2, le système d'estimation 10 comprend une unité de traitement d'informations formée par exemple d'une mémoire et d'un processeur associé à la mémoire.

Selon cet exemple, le module de réception 12, le module d'obtention 14, le module de détermination 16 et le module d'estimation 18 sont réalisés chacun sous forme d'un logiciel, ou d'une brique logicielle, exécutable par le processeur. La mémoire du système d'estimation 10 est alors apte à mémoriser un logiciel de réception, un logiciel d'obtention, un logiciel de détermination et un logiciel d'estimation. Le processeur est alors apte à exécuter chacun des logiciels parmi le logiciel de réception, le logiciel d'obtention, le logiciel de détermination et le logiciel d'estimation.

En variante non représentée, le module de réception 12, le module d'obtention 14, le module de détermination 16 et le module d'estimation 18 sont réalisés chacun sous forme d'un composant logique programmable, tel qu'un FPGA (de l'anglais *Field Programmable Gate Array*), ou encore d'un circuit intégré, tel qu'un ASIC (de l'anglais *Application Specific Integrated Circuit).*

Lorsque le système d'estimation 10 est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est, par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

Le système d'estimation 10 comporte, en outre, un module de mémorisation 20.

Le rôle de chacune des modules 12, 14, 16, 18 ou 20 apparaîtra dans la suite de la description à la lumière de la description de la mise en œuvre du procédé d'estimation.

Selon l'exemple de la figure 1, le procédé d'estimation comporte une étape de réception E30, une étape d'obtention E32, une étape d'estimation E34, une étape de détermination E36 et une étape d'estimation E38.

Lors de l'étape de réception E30, le module de réception 12 reçoit une architecture logicielle 40 telle que présentée sur la figure 2.

L'architecture logicielle 40 est formée par un ensemble de blocs 42 dont au moins un bloc matériel 44 et au moins un bloc logiciel 46.

Plus exactement, l'ensemble 42 comporte un premier sous-ensemble 48 regroupant les blocs matériels 44 et un deuxième sous-ensemble 50 regroupant les blocs logiciels 46.

Seuls deux blocs sont représentés dans chacun des sous-ensembles 48 et 50, ce nombre n'étant bien entendu par limitatif.

L'interaction entre les deux sous-ensembles 48 et 50 permet à l'architecture logicielle 40 de réaliser la ou les fonctions qu'elle met en œuvre.

L'au moins un bloc matériel 44 est choisi dans la liste constituée des blocs suivants :

- bloc de calcul (processeur, CPU, GPU),
- bloc de sécurité,
- bloc de gestion de base de données,
- bloc d'interface,
- bloc de mémorisation,
- bloc de stockage (disque dur, SDD, bande magnétique),
- bloc réseau,
- bloc de traitement de données,
- bloc de réseau de diffusion de contenu, et
- bloc firewall

Dans la liste précédente :

- l'abréviation CPU renvoie à la dénomination anglaise de « central processing unit » qui signifie littéralement unité de traitement centrale,
- l'abréviation GPU renvoie à la dénomination anglaise de « graphics processing unit » qui signifie littéralement unité de traitement graphique,
- l'abréviation SSD renvoie à la dénomination anglaise de « solid-state drive » qui se traduit souvent par disque à semi-conducteurs, et
- un réseau de diffusion de contenu est plus souvent désigné sous l'abréviation CDN qui renvoie à la dénomination anglaise correspondante de « content delivery network ».

L'au moins un bloc logiciel 46 est choisi dans la liste constituée de :

- interface de programmation d'application (plus souvent désignée par l'abréviation API qui renvoie à la dénomination anglaise correspondante de « Application Programming Interface »),
- passerelle d'interface de programmation d'application (plus souvent désignée par l'abréviation API gateway en référence à la dénomination anglaise correspondante),
- maillage de services (plus souvent désigné par l'appellation anglaise corrrespondante de « service mesh »),
- modèle de fondation, notamment modèle LLM (qui renvoie à la dénomination anglaise de 'large language model' qui signifie littéralement grand modèle de langage),
- moteur d'inférence,
- serveur Web,
- bus événementiel (souvent désigné par l'appellation anglaise correspondante de « event bus »),
- interface graphique (plus souvent désigné sous l'abréviation GUI renvoyant à la dénomination anglaise correspondante de « graphical user interface »),
- cache,
- répartiteur de charge (aussi désigné par le terme anglais de « load balancer »),
- gestion des Log (aussi désigné par la terminologie anglaise de « Log management »),
- ordonnanceur (souvent désigné par l'appellation anglaise correspondante de « scheduler »),
- microservices (parfois désigné par la dénomination de « Framework micro-services »)
- environnement sans serveur (aussi désigné par la terminologie anglaise de « Framework serverless »),
- conteneur (plus souvent désigné par la dénomination anglaise correspondante de « Container »), et
- machine virtuelle.

L'étape d'obtention E32 est mise en œuvre pour chacun des blocs 44 ou 46 de l'architecture logicielle 40 reçue.

Lors de cette étape E32, le module d'obtention 14 obtient la consommation élémentaire du bloc 44 ou 46.

Pour cela, le module d'obtention 14 lit une base de données mémorisée dans le module de mémorisation 20.

La base de données associe à chaque bloc susceptible de faire partie d'une architecture logicielle une consommation élémentaire.

La base de données a été établie avant la mise en œuvre du procédé.

La consommation élémentaire est basée sur la prise en compte d'un ensemble de dimensions conduisant à l'augmentation de la consommation élémentaire.

Ces dimensions sont, par exemple, les suivantes :

- transport : il s'agit ici du transport de données qu'il convient de limiter,
- inventaire : cette notion visant à prendre en compte la mémorisation de données, que ce soit dans des bases de données ou le code,
- latence : cela correspond au fait qu'un logiciel en attente d'une réponse ou d'un traitement consomme des ressources, notamment des ressources mémoire,
- sur-production : cette notion vise à limiter les données produites pour ne produire ou ne transporter que les données utiles
- sur-traitement : il s'agit ici de prendre en compte l'utilité des traitements effectués. A titre d'exemple particulier, un taux de compression de 1,1 ou inférieur est le signe d'une opération de compression correspondant à un sur-traitement.
- défaillance : cette notion prend en compte l'impact écologique du traitement des erreurs, des bugs et/ou défaillances.

En évaluant chacune de ces dimensions, il est possible d'obtenir une consommation élémentaire pour chaque bloc grâce aux connaissances d'un expert.

L'étape de détermination E34 est mise en œuvre pour chacun des blocs 44 ou 46 de l'architecture logicielle 40 reçue.

Lors de cette étape E34, le module de détermination 16 obtient la contribution relative de chaque bloc 44 ou 46 à la consommation de l'architecture logicielle 40.

Cette contribution est déterminée par une analyse amont durant laquelle il est évaluée la contribution relative en présence des autres blocs.

Typiquement, un bloc logiciel très sollicitant en terme de mémoire aura une pondération plus importante en présence d'un bloc peu sollicitant en terme de mémoire par rapport au cas où le bloc logiciel est en présence d'un bloc logiciel extrêmement sollicitant.

Le module d'estimation 18 met ensuite en œuvre l'étape d'estimation E36 pour obtenir une estimation de la consommation de l'architecture logicielle 40.

Pour cela, le module d'estimation 18 se base sur les consommations élémentaires et les contributions relatives déterminées.

Plus précisément, le module d'estimation 18 vient appliquer une fonction d'estimation prenant en entrée au moins les consommations élémentaires et les contributions relatives déterminées.

Selon un exemple, la fonction d'estimation est propre à calculer la somme des consommations élémentaires obtenues pondérées par les contributions relatives déterminées.

Mathématiquement, cela s'écrit :

$$C = \frac{1}{n} \sum_{i=1}^{n} w_i . a_i$$

Où :

- $C$ désigne la valeur de la consommation de l'architecture logicielle,
- $n$ désigne le nombre de blocs,
- $W_i$ désigne la contribution relative du bloc i, et
- $a_i$ désigne la consommation élémentaire du bloc i.

A titre d'illustration particulière, l'ensemble des contributions $W_i$ et des consommations élémentaires $a_i$ sont obtenues de sorte que la somme impliquée dans le calcul de la fonction d'estimation soit inférieure ou égale à 100, c'est-à-dire :

$$\sum_{i=1}^{n} w_i . a_i \leq 100$$

Selon un mode de réalisation plus élaboré, comme indiqué précédemment, la contribution relative dépend de l'utilisation du bloc 44 ou 46 par l'architecture logicielle 40.

Dans un tel cas, l'expression de la fonction d'estimation devient alors :

$$C = \frac{1}{n} \sum_{i=1}^{n} n . w_i(u) . a_i$$

Où u désigne l'utilisation.

Une telle pondération peut être qualifiée de pondération contextuelle.

Pour bien illustrer son intérêt, il peut être considéré le cas d'une interface de programmation d'application.

Les API présentent la particularité d'être bidirectionnelle, c'est-à-dire que des messages peuvent être émis par les deux extrémités en même temps et il convient donc de prendre en compte la consommation des deux extrémités.

Toutefois, il peut être utilisé un protocole où cette simultanéité n'est pas permise, par exemple un protocole permettant une réponse du serveur uniquement en présence d'une requête d'un client.

Dans un tel cas, le contexte d'utilisation fait que la pondération de l'API est à diminuer dans ce cas particulier.

D'où l'intérêt de la fonction d'estimation précédente.

L'utilisation est ici d'un bloc ne se limite pas à sa simple présence ou absence au sein de l'architecture.

L'utilisation est une mesure quantitative ou qualitative de la sollicitation effective de ce bloc.

Cette sollicitation dépend ainsi de la tâche à réaliser par l'architecture, cette tâche définissant ainsi un ensemble de conditions opérationnelles définies dont dépend la mesure de la sollicitation.

Cette mesure de sollicitation peut être, de manière non limitative, l'une des métriques suivantes ou une combinaison de celles-ci : la fréquence d'appel au bloc, une quantification des traitements réalisés par le bloc, le niveau de charge induit par le bloc sur une ressource matérielle ou encore la durée d'activation du bloc sur une période donnée.

Par exemple, la fréquence d'appel du bloc peut s'exprimer en nombre de requêtes par seconde.

La quantification des traitements réalisés par le bloc peut être un nombre de traitement ou un volume de données traitées par le bloc par unité de temps (par exemple exprimé en mégaoctets par heure).

Le niveau de charge induit par le bloc sur une ressource matérielle peut, à titre d'exemple, porter sur le pourcentage moyen d'utilisation du CPU ou de la mémoire.

Ainsi, la contribution relative d'un bloc est directement fonction de son degré de sollicitation, car un bloc fortement utilisé aura un impact proportionnellement plus important sur l'efficience globale de l'architecture qu'un bloc identique mais rarement sollicité. Le procédé de l'invention permet de modéliser cette relation pour affiner l'estimation de l'efficience.

Selon encore un autre mode de réalisation, le procédé comporte, en outre, pour chacun des blocs 44 ou 46, une étape de calcul d'un paramètre représentatif de l'intégration du bloc 44 ou 46 dans l'ensemble 42 des blocs.

La fonction d'estimation prend alors en compte les paramètres représentatifs de l'intégration ainsi obtenue.

Par exemple, la fonction d'estimation peut s'écrire mathématiquement comme suit :

$$C = \frac{1}{n}\sum_{i=1}^{n}(n.w_i(u).a_i + I_i)$$

Où $I_i$ désigne le paramètre représentatif de l'intégration du bloc i.

Pour donner un exemple dans lequel une telle formulation est intéressante, il peut être cité le cas d'une architecture sans serveur (plus communément désignée sous la dénomination anglaise de « serverless ») dans laquelle un bloc logiciel destiné à être utilisé efficacement avec un serveur. Dans un tel cas, il convient de diminuer la valeur de l'efficience.

En variante ou en complément, le procédé peut également comporter une étape d'obtention d'un coefficient correctif représentatif du type de l'architecture logicielle.

Une architecture monolithique, une architecture micro-services ou une architecture serverless sont des exemples de type d'architecture.

En notant S un tel coefficient correctif, une expression de la fonction d'estimation prenant en compte l'ensemble des éléments précédemment décrits est la suivante :

$$C = \frac{1}{n}\sum_{i=1}^{n}(n.w_i(u).a_i + I_i) + S$$

Il peut être remarqué que, dans chacun des cas précédents, il est calculé la somme des consommations élémentaires obtenues pondérées par les contributions relatives déterminées, la consommation estimée dépendant du résultat de la somme calculée.

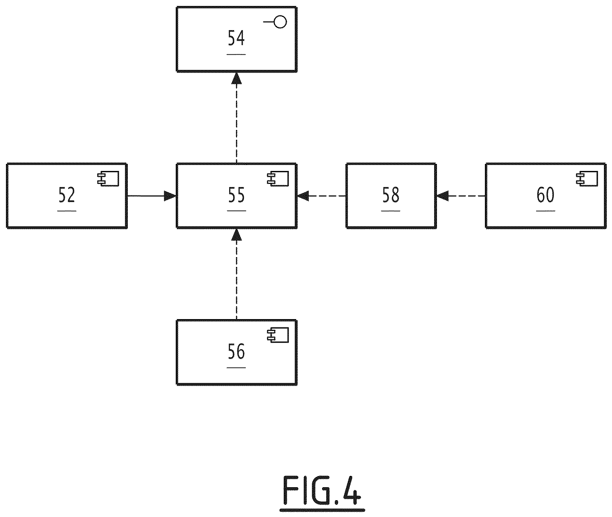

Un exemple particulier de mise en œuvre du procédé d'estimation est maintenant décrit en référence à la figure 4 qui illustre une architecture logicielle à évaluer.

Dans cette figure, l'architecture logicielle 40 est ici décrite sous forme d'un modèle ArchiMate mais toute forme de description pourrait être acceptée.

L'architecture logicielle 40 comprend un ordonnanceur 52 (plus communément appelé scheduler), un client web 54, une application d'imputation 55, une base de données des activités 56, une API 58 et un bloc de gestion des salaires 60.

L'architecture logicielle 40 est une application de gestion des activités des employés d'une entreprise sur différents projets.

Il peut être noté que, comme il s'agit d'une application web, les utilisateurs n'ont pas d'installation à réaliser sur leur poste informatique.

L'application est une application en Java de type application Web. Cette application s'exécute donc dans un serveur web Java, en l'occurrence Tomcat, qui sert de pages JSP (pour « Java Server Page » littéralement « page de serveur Java ») vers le client.

En ce qui concerne la base de données, c'est une base Oracle qui est embarquée dans une machine virtuelle VMware sur un serveur dédié.

Cette base de données comporte trois schémas différents, c'est-à-dire que cette base de données sert à trois bases autres applications en parallèle.

Les données sont mises à jour par une application JTime à l'aide d'un logiciel Hibernate.

Du point de vue matériel, il s'agit d'une application Java avec le JRE OpenJDK, JRE signifiant Java Runtime Environment (littéralement « environnement Java d'exécution ») et JDK désignant l'environnement de développement correspondant. L'application tourne sur un serveur web Apache Tomcat et se connecte à la base de données via Hibernate.

L'architecture logicielle 40 comporte aussi un serveur HTTP (Apache HTTP Server) qui sert de proxy inverse et de régulateur de charge.

Dans cet exemple, l'ensemble des blocs est obtenu par utilisation d'un outil de reconnaissance d'entités nommées.

Un tel outil est plus souvent dénommé NER en référence à la dénomination anglaise correspondante de « *Named Entity Recognition »*.

Un tel outil permet également d'extraire le rôle des différents blocs.

Dans l'exemple précis qui est ici décrit, cela conduit à obtenir la liste de blocs suivants :

- Oracle - Base de données Relationnelle
- Tomcat - Serveur Web Java, moteur de Servlet et JSP
- VTom - ordonnanceur d'entreprise
- Hibernate - ORM (Object Relational Mapping)
- APIs

Le format sous lequel le modèle correspondant est généré est indifférent.

Par exemple, le format peut être un format DAT (pour « document d'architecture technique »), un format ADR (pour « Architecture Decision Record » ou un format SDD (pour « Software Design Document »).

L'étape de réception E30 du procédé peut ainsi être réalisée en recevant les blocs de l'architecture logicielle ainsi obtenue.

L'étape d'obtention E32 sera alors mise en œuvre en utilisant la base de données qui associe une efficience élémentaire à chaque bloc.

Pour bien comprendre comment obtenir une telle efficience élémentaire, il est maintenant décrit quelques éléments à prendre en compte pour établir une telle base de données.

Dans la suite, cette explication est qualitativement décrite pour le cas de la base de données Oracle.

Cette base de données est une base de données relationnelle, ce qui est souvent dénommée RDBMS (pour la dénomination anglaise correspondante de « Relational Data Base Management System ») et OLTP (pour la dénomination anglaise correspondante de « Online Transaction Processing »).

Plusieurs éléments influant sur l'efficience de cette base de données sont maintenant décrit, sachant que cette liste n'est pas nécessairement exhaustive.

Le langage est un premier exemple d'élément influant sur l'efficience dans ce contexte.

Il s'agit du langage de programmation dans lequel est écrit cette base de donnée.

Cette propriété est notamment utilisée pour son impact sur l'empreinte mémoire. En effet, un langage comme Java peut impliquer 15 fois plus de besoin qu'une base de données écrite en Rust.

Sachant que plus on utilise de mémoire, plus on consomme d'énergie et donc plus le besoin en configuration lourdes et en serveurs est important, de sorte que le langage est bien relié à l'impact écologique.

Un deuxième exemple est la capacité d'une base de données à accueillir plusieurs types de base de données.

Par exemple, un type est OLTP (qui renvoie à la dénomination anglaise correspondante de « OnLine Transactional Processing ») en fonctionnant par traitement transactionnel) et un autre type est OLAP (renvoyant à la denomination anglaise correspondante de « OnLine Analytical Processing ») en fonctionnant par traitement analytique.

En effet, une telle capacité permet d'éviter l'emploi de deux base de données différentes.

Un troisième exemple est l'efficacité des requêtes dans la base de données

De fait, cette efficacité impacte beaucoup l'utilisation du processeur et des accès disques, ce qui a un fort impact sur l'empreinte environnementale de la base de données.

Un quatrième exemple est de savoir si la base de données est nativement construite comme une base distribuée ou non.

Un cinquième exemple est la possibilité de faire des traitements dans la mémoire ou non. De fait, en présence d'une telle capacité, cela permet de réduire les accès disque.

Un sixième exemple est la manière donc les transactions sont gérées.

En effet, la gestion des transactions propre aux bases OLTP est crucial notamment d'un point de vue consommation de ressource et une bonne gestion permet de limiter autant l'usage du processeur et de la mémoire.

Un septième exemple est la gestion des accès concurrents.

Encore un autre exemple est la capacité ou non de réaliser un ajustement automatique de la performance. Cela permet notamment d'améliorer fortement les capacités d'indexation.

Un tel procédé permet donc d'estimer la consommation d'une architecture logicielle avec une bonne précision sans avoir à la fabriquer. En particulier, aucune mesure physique n'est réalisée.

En ce sens, le procédé peut être vu comme une technique d'évaluation du score qualitatif d'éco-conception d'une architecture logicielle.

Cela est notamment avantageux en conception pour pouvoir tester de multiples architectures logicielles.

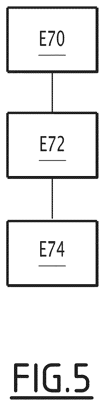

Ainsi, le procédé d'estimation qui vient d'être décrit est avantageusement utilisé dans un procédé de réalisation d'une architecture logicielle formée par un ensemble de blocs, comme schématiquement illustré par la figure 5.

Le procédé de réalisation comporte une étape de mise en œuvre E70, une étape de sélection E72 et une étape de réalisation E74.

Lors de l'étape de mise en œuvre E70, le système d'estimation 10 met en œuvre le procédé d'estimation précédent sur un ensemble d'architectures logicielles 40 candidates.

Cela signifie que les étapes du procédé d'estimation sont mises en œuvre de manière itérative, chaque itération correspondant à une architecture logicielle 40 candidate respective.

Ainsi, à chaque itération, le système d'estimation 10 obtient la consommation d'une architecture logicielle candidate.

L'étape de sélection E72 est une étape de sélection d'une architecture logicielle 40 candidate sur la base des consommations estimées à l'étape d'estimation E70.

Pour cela, selon l'exemple décrit, il est sélectionné l'architecture logicielle correspondant à la consommation la plus élevée.

Lors de l'étape de réalisation E74, l'architecture logicielle 40 ainsi sélectionnée est réalisée.

La réalisation peut varier selon les modes de réalisation.

Selon un premier exemple, la réalisation est une fabrication de l'ensemble 42 des blocs, de sorte que l'architecture logicielle 40 est disponible physiquement et donc propre à être utilisée par un utilisateur.

Concrètement, les blocs matériels 44 sont fabriqués ou obtenus auprès d'un fournisseur, puis les blocs logiciels 46 sont chargés sur les blocs matériels 46 permettant de les mettre en œuvre.

Selon un deuxième exemple, la réalisation consiste à entrer les blocs 44 ou 46 choisis dans un outil de simulation pour déterminer d'autres indicateurs de performance de l'architecture logicielle 40, et notamment déterminer si l'architecture logicielle 40 est adaptée pour l'utilisation souhaitée. Le procédé sert alors à évaluer un score qualitatif d'éco-conception d'une architecture logicielle 40 en amont de sa réalisation.

Alternativement, au lieu de réaliser deux phases distinctes, il peut être envisagé de déterminer ces indicateurs de performance en même temps que l'efficience.

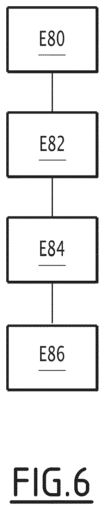

La figure 6 illustre un exemple de mise en œuvre d'un tel procédé d'estimation.

Le procédé d'estimation vise à estimer une valeur de performance.

Pour cela, le procédé d'estimation comporte une étape de réception E80, une étape d'obtention E82, une étape de détermination E84 et une étape d'estimation E86.

L'étape de réception E80 est similaire à l'étape de réception E30, de sorte que les mêmes remarques que précédemment s'appliquent.

L'étape d'obtention E82 est similaire à l'étape d'obtention E32, de sorte que les mêmes remarques que précédemment s'appliquent.

La base de données utilisées lors de cette étape E82, c'est-à-dire la base de données associant à chaque bloc susceptible de faire partie d'une architecture logicielle une efficience élémentaire, est notée première base de données dans la suite.

Lors de l'étape de détermination E84, il est déterminé, pour chacun des blocs 44 ou 46, au moins un indicateur de performance élémentaire.

L'indicateur de performance élémentaire est distinct d'un indicateur d'efficience.

Par exemple, l'indicateur de performance est choisi parmi un indicateur de sécurité, un indicateur de fiabilité et un indicateur de qualité.

Selon un autre exemple, l'indicateur de performance est choisi parmi un indicateur de sécurité, un indicateur de fiabilité, un indicateur de performance et un indicateur de qualité.

Toute combinaison des indicateurs précédents est envisageable.

En particulier, la combinaison d'un indicateur de sécurité, d'un indicateur de fiabilité et d'un indicateur de performance est particulièrement pertinente.

L'indicateur de sécurité est une métrique qui quantifie la robustesse de l'architecture face à des menaces définies.

En ce sens, l'indicateur de sécurité n'est généralement pas une simple mesure de type binaire.

L'indicateur de sécurité est déterminé comme une évaluation globale de plusieurs sous-indicateurs dont la présence dépend du cas d'usage.

Dans certain cas, l'indicateur de sécurité est l'un des sous-indicateurs ou une moyenne pondérée ou non de ces sous-indicateurs.

Un exemple de sous-indicateur est la surface d'attaque de l'architecture.

Un tel sous-indicateur peut être calculé en fonction du nombre de points d'entrée (API exposées, ports ouverts) et de la complexité des dépendances entre les blocs logiciels.

Un autre exemple de sous-indicateur est le niveau de chiffrement des données.

Un tel sous-indicateur est, par exemple, mesuré en prenant en compte la longueur des clés et l'étendue de son application (données au repos, données en transit).

Encore un autre exemple de sous-indicateur est la complexité de la gestion des identités et des accès.

Un tel sous-indicateur estime, par exemple, le nombre de rôles impliqués dans cette gestion avec l'idée que plus le nombre de rôles est grand, plus la gestion est complexe.

L'indicateur de fiabilité quantifie la capacité de l'architecture à fonctionner sans défaillance dans des conditions définies et pour une période de temps donnée.

On peut, par exemple, exprimer l'indicateur de fiabilité comme le minimum du temps moyen entre pannes de chaque bloc, temps généralement connu du constructeur.

Ce temps moyen entre pannes est souvent désigné sous l'abréviation MTBF qui renvoie à la dénomination anglaise correspondante de « Mean Time Between Failures ».

L'indicateur de qualité est une mesure qui quantifie l'adéquation de l'architecture logicielle à des exigences opérationnelles intrinsèques, indépendamment de toute perception subjective de l'utilisateur.

A titre d'exemple, un tel indicateur peut prendre en compte la latence de traitement des requêtes, la maintenabilité du bloc ou le débit transactionnel.

L'indicateur de performance est une évaluation de la capacité de traitement de l'architecture.

Cette capacité peut recouvrir deux aspects pouvant être pris isolément selon la définition choisie pour l'indicateur de performance : la précision du traitement et le comportement dynamique du traitement.

Le comportement dynamique peut être évolué par un ensemble de sous-indicateurs objectifs qui sont ensuite agrégés.

A titre d'exemple, un sous-indicateur objectif est la vitesse de calcul, la bande passante et la capacité de parallélisation.

Par exemple, la vitesse de calcul est une métrique de vitesse de calcul unitaire mesurant le temps nécessaire à un bloc pour exécuter une opération fondamentale.

La bande passante est, par exemple, un sous-indicateur quantifiant la vitesse à laquelle les blocs peuvent lire ou écrire des données dans les mémoires avec lesquelles ces blocs interagissent.

La capacité de parallélisation évalue l'aptitude de l'architecture à traiter simultanément plusieurs tâches ou requêtes, soit par une mise à l'échelle verticale (augmentation du nombre de cœurs de processeur actifs) soit par une mise à l'échelle horizontale (déploiement de nouvelles instances de blocs logiciels).

L'étape de détermination E84 est mise en œuvre par lecture dans une deuxième base de données.

La deuxième base de données associe à chaque bloc susceptible de faire partie d'une architecture logicielle ledit au moins un indicateur de performance élémentaire.

Dans l'exemple décrit, la première base de données et la deuxième base de données sont distinctes mais il est également possible que les deux bases de données soient confondues, les informations lues aux étapes E82 et E84 étant simplement issues d'une colonne différente.

Dans ce mode de réalisation, la deuxième base de données est, par exemple, une table de décision.

La deuxième base de données a été établie préalablement à la mise en œuvre du procédé d'estimation en collectant des connaissances d'un expert.

Typiquement, pour chaque bloc 44 ou 46, il est indiqué si l'impact est positif, neutre ou négatif pour l'indicateur de performance considéré.

A l'issue de la mise en œuvre de l'étape de détermination E84, pour chaque bloc 44 ou 46 d'une valeur d'efficience élémentaire et d'une valeur pour l'indicateur de performance élémentaire.

Lors de l'étape d'estimation E86, il est estimé la performance de l'architecture logicielle 40 à partir des efficiences élémentaires obtenues et des indicateurs de performance élémentaire.

Selon un exemple, l'étape d'estimation E86 comporte une agrégation des efficiences élémentaires pour obtenir une efficience globale.

Similairement, l'étape d'estimation E86 comporte une agrégation des indices de performance élémentaires pour obtenir un indice de performance global.

Cette agrégation est mise en œuvre pour chaque indice de performance qu'on souhaite évaluer.

Selon un mode de réalisation avantageux, la performance est évaluée par application d'une fonction d'estimation sur l'efficience global et l'au moins un indice de performance global.

La fonction d'estimation est, par exemple, une somme pondérée par des coefficients de pondération dont la valeur dépend des exigences voulues pour l'architecture logicielle 40.

Typiquement, si l'architecture logicielle 40 est un système critique, la fiabilité est primordiale et prime sur l'efficience, de sorte que le coefficient de pondération de la fiabilité est bien plus élevé que le coefficient de pondération de l'efficience.

Un tel procédé permet ainsi d'évaluer la performance d'une architecture logicielle 40 en déterminant les frictions entre les indicateurs de performance et l'efficience.

L'intérêt de la détermination de telles frictions apparaîtra mieux à travers des exemples de cas concrets où des frictions qu'un tel procédé d'estimation permet d'obtenir. Ces exemples sont maintenant succinctement décrits.

Un premier exemple est celui de la transmission de données et de la compression. En effet, il est préconisé, à juste titre, de limiter les volumes de données que l'on fait transiter sur le réseau.

Ce principe amène donc à vouloir compresser les données ce qui effectivement limitera le volume de données transmises donc l'empreinte carbone induite.

Cependant, le fait de compresser des données a aussi un coût énergétique. Qui plus est, si l'on compresse à la source, il faut généralement décompresser à la destination et donc là encore cela a un coût énergétique.

La décision de compresser n'est donc pas aussi triviale qu'il pourrait paraitre il convient de considérer plusieurs éléments, parmi lesquels le volume des données, leur type (binaire ou textuelle), leur représentation (par exemple XML ou JSON ou ProtoBuf), la distance à parcourir, l'algorithme utilisé ou la nature chiffrée ou non des données.

Un deuxième exemple est celui du chiffrement des données qui implique une friction entre sécurité et efficience.

Le chiffrement est une opération mathématique qui consomme de façon notable le processeur. Qui plus est, pour des données souvent accédées en lecture, il est nécessaire de déchiffrer systématiquement et si l'on modifie les données chiffrées, alors il faut les chiffrer à nouveau avant de les sauvegarder.

On peut remarquer que cette problématique pourrait être contournée en conservant en cache une version déchiffrée, mais alors l'intérêt de chiffrer les données du point de vue de la sécurité est perdu.

Il sera donc utile de trouver un compromis entre la sécurité et la consommation selon la nature des données et la fréquence des accès à ces données.

Des considérations similaires s'appliquent pour l'historique, la traçabilité ou l'audit pondéré.

Toutefois, d'autres exemples peuvent être cités en ce qui concerne la friction sécurité/durabilité.

Ainsi, certaines approches ou types de containers peuvent induire des vulnérabilités.

Un autre aspect est la mesure. De fait, pour limiter la consommation, il convient de surveiller la consommation en temps réel.

Cependant, les outils de mesure eux-mêmes peuvent parfois perturber la sécurité notamment en augmentant la surface d'attaque.

Pour bien montrer la complexité de la prise en compte des différents paramètres, il peut être aussi rappelé ici qu'il est possible de gagner à la fois en sécurité et en efficience.

En effet, en évitant tout ce qui est inutile dans l'architecture logicielle (lignes de code non utilisés ou matériel inutile), il y a un gain en efficience et une réduction de la surface d'attaque limitant ainsi les vulnérabilités.

Un autre exemple est la redondance qui augmente la fiabilité mais diminue l'efficience.

Typiquement, avoir deux datacenters dans une architecture logicielle que ce soit en mode actif ou passif conduit à consommer plus d'énergie qu'un seul.

Le bon équilibre dependra de plusieurs paramètres parmi lesquels la nature du système, le type de données hébergées, la consommation moyenne de carbone dans les différents datacenters, la distance séparant les datacenters, la probabilité de survenance d'événements naturels dangereux ou encore la probabilité d'une attaque.

Ces observations concernent aussi les serveurs, les alimentations, les pare-feu, les données ou encore la ou les sauvegardes.

La qualité et l'efficience peuvent aussi générer des frictions.

Par exemple, on peut diminuer la précision d'un calcul en délivrant un entier au lieu d'un nombre décimal ou diffuser une vidéo en noir et blanc au lieu d'une vidéo couleur.

Dans la même idée, il est possible de grouper les traitements dans un batch qui est exécuté à un moment où la consommation en carbone est basse.

Similairement, il peut être introduit un décalage spatial ou temporel dans le traitement d'une requête.

Un autre exemple est le comportement du système dans les temps de non-sollicitation. En effet, un démarrage à froid prend du temps alors qu'un système fonctionnel en permanence, y compris en l'absence de sollicitations, va consommer beaucoup. Là encore, un compromis est à trouver.

Autrement formulé, il a été présenté une telle technique de mesure des frictions entre les piliers d'une architecture logicielle.

Il a été présenté comment mesurer et évaluer les impacts d'une décision d'architecture basée sur l'objectif d'une éco-conception peut avoir sur les autres attributs, ici appelés piliers de l'architecture.

Une architecture logicielle ou de système logicielle est complexe, entre la gestion des données, les communications réseaux, ou simplement les traitements. Il existe donc de nombreux attributs et propriétés à évaluer pour comprendre, mesurer, et qualifier une architecture en rapport aux besoins.

Les Piliers, ou attributs prépondérants, usuellement considérés sont ceux présentés précédemment, à savoir la sécurité, la résilience, la performance, le coût, l'excellence des opérations et la durabilité.

Tous ces piliers ne sont pas indépendants et l'optimisation de l'un peut affecter les autres (positivement ou négativement)

D'autres exemples particuliers sont maintenant décrits.

La technique décrite se base sur les décisions d'architecture, usuellement enregistrées par exemple dans des ADR et non sur les blocs ou composants de l'architecture même si l'on peut considérer que le choix de tel composant ou bloc est une décision.

Un exemple très simple et parlant d'une décision et de son impact sur d'autres piliers est le chiffrement des données.

Chiffrer des donner est coûteux en terme de traitements et opérations mathématiques, de ce fait ce n'est pas "frugal". Supprimer le chiffrement aura donc un effet sur l'économie d'énergie, donc durable, mais dans le même temps mettra à défaut la sécurité

Dans ce cas précis il s'agit donc bien de "décision"

Prenons par contre un autre exemple celui du choix de la base de données.

Imaginons le choix d'une base de données ayant des propriétés de frugalité reconnues mais qui nécessite une licence, il y aura alors un impact sur le coût.

C'est donc le composant en soi qui impact mais ce que l'on considère ici, plus que le composant, c'est le fait de l'avoir choisi, la décision donc.

Les décisions peuvent concerner un simple bloc, par exemple sur cette base de données il est décidé de ne pas enregistrer les traces accès, ce qui rendra ce bloc plus vertueux (décision éco responsable) mais aussi amoindri les possibilités d'audit (pilier sécurité)

Les décisions peuvent aussi s'appliquer au style d'architecture logicielle global choisi (micro-services, sans serveur...) ou encore au niveau de l'infrastructure elle-même, donc l'architecture physique, comme utiliser des processeurs basse-consommation ce qui limite la consommation donc est éco responsable mais peut aussi se traduire par une baisse des performances, ou une redondance active/passive avec deux centre de données différents.

L'ensemble des impacts pour donc l'ensemble des décisions sont cumulés soit au niveau du bloc soit au niveau de l'architecture logicielle. Il est ainsi possible de faire cette somme au niveau d'un seul bloc ou alors d'un groupe de blocs, voire de l'architecture globale.

Prenons le cas d'un bloc $B_i$, i étant un indice dans l'architecture globale.

Chaque décision est notée $D_{i,j}$ ce qui représente la décision j concernant le bloc $B_i$ La friction F pour le pilier p sera notée $F_P$ et est calculée comme suit :

$$F_P = \sum_{j=0}^{D} d_{i,j}$$

À la différence de la mesure de consommation où les mesures s'additionnent, ici comme les impacts peuvent très bien être positif, il est important de donner des valeurs non plus dans $\mathbb{N}$ mais dans $\mathbb{Z}$.

Pour chaque décision $d_j$ (on omet ici l'indice du composant pour des raisons de simplicité) on a un facteur $p_j$ de sorte qu'il peut être décrit :

$$F_P = \sum_{j=0}^{D} p_j d_j$$

Dans cet exemple, il est supposé qu'un pilier donné peut avoir un impact qualitatif parmi 5 valeurs : nul (0), bas (25), modéré (50), fort (75) et très fort (100).

Comme ces valeurs sont toutes positives, il est ajouté un facteur multiplicatif pouvant prendre les valeurs -1 ou 1 selon que l'impact est positif (-1) ou négatif (1).

Par exemple, supprimer un centre de données redondant réduit les coûts de façon drastique (impact très fort) mais dans le même temps réduit la résilience.

La technique prend également en compte le fait que toutes les décisions ne sont pas égales et que certaines auront plus, ou moins, d'impact que les autres en fonction notamment du contexte ou du cas d'utilisation

À ce titre, il est ajouté des pondérations $W_j$ selon l'équation :

$$F_P = \sum_{j=0}^{D} W_j p_j d_j$$

Dans l'exemple décrit, ces pondérations sont données en terme d'importance avec trois niveau : bas (correspondant à une pondération d'importance 1), modéré (correspondant à une pondération d'importance 1) et élevé (correspondant à une pondération d'importance 2).

De ce fait, si par exemple, nous avions eu deux décisions qui pour le pilier p correspondent à 50 mais que la première, dans le cas d'usage est plus important, on lui attribuera une pondération d'importance 2 et l'autre une pondération d'importance 1, ce qui donnerait des poids de 0,66 (⅔) et 0,34 (⅓).

Il est à noter qu'une somme totale ne doit pas dépasser 100 en attribuant ces pondérations.

Si l'on considère alors le système dans sa globalité, alors la somme sur les blocs est réalisée en ajoutant pour chaque bloc $B_i$ un poids d'importance dans le système global que l'on note $b_i$:

$$F_P = \sum_{i=1}^{N} \left( b_i \sum_{j=0}^{D_b} W_j p_j d_j \right)$$

Et puis la mesure du système lui-même est ajoutée c'est-à-dire les décisions prises au niveau système et non bloc, ce qui s'exprime en ajoutant des indices liés aux blocs et aux systèmes :

$$F_P = \sum_{i=1}^{N} \left( b_i \sum_{j=0}^{D_b} W_j p_j d_j \right) + \sum_{i}^{D_s} d s_i$$

Le procédé permet donc de trouver un compromis entre l'efficience et les autres indicateurs de performance.

Ce compromis permet d'améliorer l'efficience de l'architecture logicielle 40 en maîtrisant son impact sur les autres indicateurs de performance attendus.

Dans certains cas, les blocs 44 et 46 pour lesquels un compromis est à gérer entre l'efficience et un indicateur de performance sont connus.

Il est alors avantageux de mettre en œuvre les agrégations de l'étape d'estimation E86 seulement pour les blocs 44 et 46 impliqués dans le compromis.

Un tel procédé est aisé à mettre en œuvre.

Le procédé est réalisable par un système d'estimation 90 de la performance, le système d'estimation 90 comportant un module de réception 92 mettant en œuvre l'étape de réception E80, un module de mémorisation 94 mémorisant les deux bases de données, un module d'obtention 94 mettant en œuvre l'étape d'obtention E82, un module de détermination 96 mettant en œuvre l'étape de détermination et un module d'estimation 98 propre à mettre en œuvre l'étape d'estimation E84.

Selon un autre mode de réalisation, l'étape de détermination E84 est réalisée par interaction du système d'estimation 90 avec une interface de programmation applicative. Dans un tel cas, le module de mémorisation 94 mémorise uniquement la première base de données.

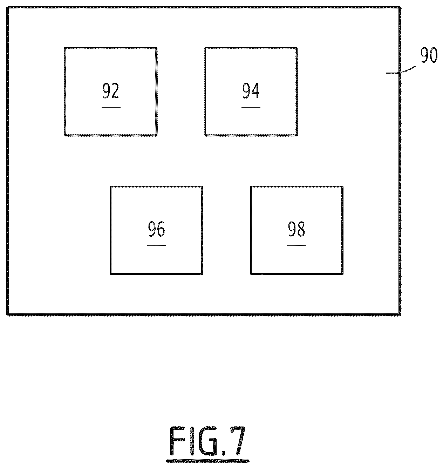

Dans l'exemple de la figure 7, le système d'estimation 90 comprend une unité de traitement d'informations formée par exemple d'une mémoire et d'un processeur associé à la mémoire.

Selon cet exemple, le module de réception 92, le module d'obtention 94, le module de détermination 96 et le module d'estimation 98 sont réalisés chacun sous forme d'un logiciel, ou d'une brique logicielle, exécutable par le processeur. La mémoire du système d'estimation 90 est alors apte à mémoriser un logiciel de réception, un logiciel d'obtention, un logiciel de détermination et un logiciel d'estimation. Le processeur est alors apte à exécuter chacun des logiciels parmi le logiciel de réception, le logiciel d'obtention, le logiciel de détermination et le logiciel d'estimation.

En variante non représentée, le module de réception 92, le module d'obtention 94, le module de détermination 96 et le module d'estimation 98 sont réalisés chacun sous forme d'un composant logique programmable, tel qu'un FPGA (de l'anglais *Field Programmable Gate Array*), ou encore d'un circuit intégré, tel qu'un ASIC (de l'anglais *Application Specific Integrated Circuit).*

Lorsque le système d'estimation 90 est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est, par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

## Revendications

1. Procédé d'estimation de la performance d'une architecture logicielle (40) formée par un ensemble (42) de blocs (44, 46), l'ensemble (42) de blocs (44, 46) comportant au moins un bloc matériel (44) et au moins un bloc logiciel (46), le procédé d'estimation étant mis en œuvre par un système d'estimation (90), le procédé d'estimation comprenant :

   - une étape de réception d'un ensemble (42) de blocs (44, 46) formant une architecture logicielle (40),
   - pour chacun des blocs (44, 46), une étape d'obtention de l'efficience élémentaire du bloc (44, 46) par lecture d'une première base de données, la première base de données associant à chaque bloc susceptible de faire partie d'une architecture logicielle (40) une efficience élémentaire,

   - pour chacun des blocs (44, 46), une étape de détermination d'au moins un indicateur de performance élémentaire, l'au moins un indicateur de performance élémentaire étant distinct de l'efficience, l'étape de détermination est mise en œuvre par lecture dans une deuxième base de données, la deuxième base de données associant à chaque bloc susceptible de faire partie d'une architecture logicielle ledit au moins un indicateur de performance élémentaire, et
   - une étape d'estimation de la performance de l'architecture logicielle (40) à partir des efficiences élémentaires obtenues et des indicateurs de performance élémentaire.

2. Procédé d'estimation selon la revendication 1, dans lequel la deuxième base de données est une table de décision.

3. Procédé d'estimation selon la revendication 1 ou 2, dans lequel l'étape de détermination est réalisée par interaction du système d'estimation (90) avec une interface de programmation applicative.

4. Procédé d'estimation selon l'une quelconque des revendications 1 à 3, dans lequel l'au moins indicateur de performance est choisi dans la liste constitué par un indicateur de sécurité, un indicateur de fiabilité et un indicateur de qualité.

5. Procédé d'estimation selon l'une quelconque des revendications 1 à 4, dans lequel les indicateurs de performances déterminés à l'étape de détermination sont un indicateur de sécurité, un indicateur de fiabilité, un indicateur de performance et un indicateur de qualité.

6. Procédé d'estimation selon l'une quelconque des revendications 1 à 5, dans lequel l'étape d'estimation comporte une agrégation des efficiences élémentaires pour obtenir une efficience globale.

7. Procédé d'estimation selon la revendication 6, dans lequel chaque agrégation est mise en œuvre pour une partie seulement des blocs (44, 46) de l'ensemble (42) des blocs (44, 46).

8. Procédé de réalisation d'une architecture logicielle (40) formée par un ensemble (42) de blocs (44, 46), l'ensemble (42) de blocs (44, 46) comportant au moins un bloc matériel (44) et au moins un bloc logiciel (46), le procédé comprenant :

   - une étape de mise en œuvre du procédé d'estimation selon l'une quelconque des revendications 1 à 7 sur un ensemble d'architectures logicielles (40) candidates, pour obtenir l'efficience de chaque architecture logicielle (40) candidate,
- une étape de sélection de l'architecture logicielle (40) candidate présentant la performance la plus élevée, et
- une étape de réalisation de l'architecture logicielle (40) sélectionnée.

9. Système d'estimation (90) de la performance d'une architecture logicielle (40) formée par un ensemble (42) de blocs (44, 46), l'ensemble (42) de blocs (44, 46) comportant au moins un bloc matériel (44) et au moins un bloc logiciel (46), le système d'estimation (90) comprenant :

- un module de réception (92), le module de réception (92) étant propre à recevoir un ensemble (42) de blocs (44, 46) formant une architecture logicielle (40),
- un module de mémorisation, le module de mémorisation étant propre à mémoriser une première base de données associant à chaque bloc susceptible de faire partie d'une architecture logicielle une efficience élémentaire,
- un module d'obtention (94), le module d'obtention (94) étant propre à, pour chacun des blocs, obtenir l'efficience élémentaire du bloc (44, 46) par lecture de la première base de données,
- un module de détermination (96), le module de détermination (96) étant propre à, pour chacun des blocs (44, 46), déterminer au moins un indicateur de performance élémentaire, l'au moins un indicateur de performance élémentaire étant distinct de l'efficience, le module de déterminant l'au moins un indicateur de performance élémentaire par lecture dans une deuxième base de données, la deuxième base de données associant à chaque bloc susceptible de faire partie d'une architecture logicielle ledit au moins un indicateur de performance élémentaire, et
- un module d'estimation (98), le module d'estimation (98) étant propre à estimer la performance de l'architecture logicielle (40) à partir des efficiences élémentaires obtenues et des indicateurs de performance élémentaire.

E30

E32

E34

E36

E38

FIG.1

## FIG.2

48    50

44    46

44    46

40

42

# FIG.3

FIG.4

E70

E72

E74

FIG.5

E80

E82

E84

E86

# FIG.6

90

92

94

96

98

## FIG.7

Europäisches
Patentamt

European
Patent Office

Office européen
des brevets

**RAPPORT DE RECHERCHE EUROPEENNE**

Numéro de la demande

**EP 25 22 5101**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 4 064 049 A1 (ACCENTURE GLOBAL SOLUTIONS LTD [IE]) 28 septembre 2022 (2022-09-28) * abrégé; figures 1b, 2-5 * * alinéas [0052] - [0074] * ----- | 1-9 | INV. G06F11/34 |
| X | US 2012/259613 A1 (LAFAYE MICHAEL [FR]) 11 octobre 2012 (2012-10-11) * abrégé * ----- | 1-9 | |

**DOMAINES TECHNIQUES RECHERCHES (IPC)**

G06F

Le présent rapport a été établi pour toutes les revendications

| Lieu de la recherche | Date d'achèvement de la recherche | Examinateur |
|---|---|---|
| Munich | 7 avril 2026 | Leuridan, Koen |

EPO FORM 1503 03.82 (P04C02)

**EP 4 764 866 A1**

## ANNEXE AU RAPPORT DE RECHERCHE EUROPEENNE
## RELATIF A LA DEMANDE DE BREVET EUROPEEN NO.

EP 25 22 5101

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-04-2026

| Document brevet cité au rapport de recherche | | Date de publication | Membre(s) de la famille de brevet(s) | | Date de publication |
|---|---|---|---|---|---|
| EP 4064049 | A1 | 28-09-2022 | EP | 4064049 A1 | 28-09-2022 |
| | | | US | 2022308939 A1 | 29-09-2022 |
| US 2012259613 | A1 | 11-10-2012 | FR | 2973908 A1 | 12-10-2012 |
| | | | US | 2012259613 A1 | 11-10-2012 |

EPO FORM P0460

Pour tout renseignement concernant cette annexe : voir Journal Officiel de l'Office européen des brevets, No.12/82